# EUROPÄISCHE PATENTSCHRIFT

(11) **EP 3 634 804 B1**
(45) Veröffentlichungstag und Bekanntmachung des Hinweises auf die Patenterteilung: **30.12.2020**
(21) Anmeldenummer: 18731992.6
(22) Anmeldetag: 08.06.2018
(51) Int. Cl.: B60N 2/90

(54) **KONFIGURATION EINES MASSAGEPROGRAMMS FÜR EINE MASSAGEEINRICHTUNG EINES FAHRZEUGSITZES**
CONFIGURATION OF A MASSAGE PROGRAM FOR A MASSAGE DEVICE OF A VEHICLE SEAT
CONFIGURATION D'UN PROGRAMME DE MASSAGE POUR UN DISPOSITIF DE MASSAGE D'UN SIÈGE DE VÉHICULE

(30) Priorität: 08.06.2017 DE 102017209705
(43) Veröffentlichungstag der Anmeldung: 15.04.2020
(73) Patentinhaber: Volkswagen Aktiengesellschaft, 38440 Wolfsburg (DE)
(72) Erfinder: RENDEL, Holger, 38112 Braunschweig (DE); MEITZNER, Matthias, 38176 Wendeburg (DE)
(86) Internationale Anmeldenummer: PCT/EP2018/065109
(87) Internationale Veröffentlichungsnummer: WO 2018/224631

(56) Entgegenhaltungen:
- EP-A2- 0 778 173
- DE-A1-102012 201 331
- DE-A1-102013 012 768
- DE-A1-102016 003 573

## Beschreibung

Die Erfindung betrifft ein Verfahren und ein System zur Konfiguration eines Massageprogramms einer Massageeinrichtung eines Fahrzeugsitzes eines Fahrzeuges mittels einer elektronischen Steuereinheit.

Die Druckschrift DE 10 2013 012 768 A1 beschreibt ein Verfahren zur Einstellung einer Massagefunktion über eine elektronische Steuereinheit, wobei die Massage ausschließlich auf der mobilen elektronischen Steuereinheit definiert wird.

Die Druckschrift DE 10 2006 003 573 A1 beschreibt eine Massagefunktion über separate Kontaktflächen in einem Fahrzeugsitz, die jeweils aktiviert oder nicht aktiviert sein können.

Die Druckschriften DE 10 2012 212 834 A1 und DE 10 2014 205 574 A1 beschreiben eine Massagefunktion mit blockweiser Definition von Massageabschnitten.

Außerdem offenbart die Druckschrift DE 10 2007 053 119 A1 die Nutzung von Drucksensoren im Fahrzeugsitz zur Erkennung der Belastung von Druckkissen für eine einer Person zugeordnete Position.

Schließlich ist noch die Druckschrift DE 10 2015 218 051 bekannt, die ein Verfahren zur Steuerung einer elektromechanischen Lordose beschreibt. Es werden zwei Funktionsprinzipien von Massagefunktionen in Fahrzeugsitzen erläutert: Bei einem ersten Funktionsprinzip werden im Fahrzeugsitz verbaute Kissen hydraulisch oder pneumatisch stärker oder schwächer gefüllt, was zu einer mehr oder weniger starken Wölbung und Druckausübung auf das anliegende Körperteil führt. Bei einem zweiten Funktionsprinzip wird ein festes Bauelement senkrecht zur Anlagefläche bewegt, wodurch ein Druck auf den Insassen ausgeübt wird, indem ein punktueller Druck zunächst auf ein Kunststoffschild ausgeübt wird, der je nach Gestaltung des Schildes verteilt und auf den Insassen übertragen wird. Es wird im Detail zur elektromechanischen Lordose beschrieben, dass Benutzereingaben erfasst werden, die einen eingegebenen Bewegungsablauf in ein, zwei oder drei Raumrichtungen umfassen. Anhand der Benutzereingaben über eine Erfassungseinheit, insbesondere ein mobiles Nutzergerät, werden Steuersignale zum Steuern der elektromechanischen Lordose erzeugt und die Steuersignale werden gespeichert. Schließlich wird eine Bewegung der elektromechanischen Lordose, insbesondere des Lordoseschildes, anhand der Steuersignale ausgeführt. Die Bewegung des Lordoseschildes der elektromechanischen Lordose erfolgt entlang des eingegebenen Bewegungsablaufs oder einer anhand dieses Bewegungsablaufs bestimmten Trajektorie. Das zugehörige System umfasst eine Erfassungseinheit, eine Steuereinheit und eine Speichereinheit sowie eine externe Speichereinheit. Über eine Schnittstelle ist das System an die elektromechanische Lordose, die in vorteilhafter Weise ebenfalls als Massagevorrichtung ausgebildet ist, gekoppelt.

Gattungsgemäßen Stand der Technik bilden auch die Druckschriften EP 0 778 173 A2 und DE 10 2013 012 768 A1 sowie DE 10 2016 003 573 A1.

Der Erfindung liegt die Aufgabe zugrunde, ein Verfahren und ein System zur Konfiguration eines Massageprogramms für eine Massageeinrichtung eines Fahrzeugsitzes eines Fahrzeuges mittels einer elektronischen Steuereinheit zu schaffen, welches dem Anwender eine seinen Bedürfnissen entsprechende einfache und intuitive Konfiguration, im Sinne von komfortablen Bedienhandlungen, ermöglicht.

Ausgangspunkt der Erfindung ist ein Verfahren zur Konfiguration eines Massageprogramms einer Massageeinrichtung eines Fahrzeugsitzes eines Fahrzeuges mittels einer elektronischen Steuereinheit, die indirekt oder direkt mit mindestens einem Steuergerät des Fahrzeugsitzes des Fahrzeugs kommuniziert, wobei bei der Konfiguration des erstellten Massageprogramms mindestens ein druckbeaufschlagbares Element des Fahrzeugsitzes mittels der elektronischen Steuereinheit angesteuert wird und das Steuergerät des Fahrzeugsitzes das Massageprogramm nach dem Start des Massageprogramms gemäß der vorgenommenen Konfiguration durch Ansteuerung der einzelnen druckbeaufschlagbaren Elemente im Fahrzeugsitz ausgibt.

Erfindungsgemäß ist vorgesehen, dass innerhalb der Konfiguration zur Erstellung des Massageprogramms mindestens ein Konfigurationsschritt mittels der elektronischen Steuereinheit und mindestens ein Konfigurationsschritt direkt an dem Sitzteil und/oder an dem Rückenlehnenteil vorgenommen werden. Ein wesentlicher Vorteil besteht darin, dass mindestens ein Konfigurationsschritt durch eine Bedienhandlung direkt an dem mindestens einen druckbeaufschlagbaren Element des Fahrzeugsitzes vorgenommen wird, wodurch eine intuitive Bedienung durch den Anwender möglich ist. Zudem besteht ein weiterer wesentlicher Vorteil darin, dass der Anwender bei der Konfiguration mittels seiner Bedienhandlung nicht nur einen Enddruck des mindestens einen druckbeaufschlagbaren Elementes einstellt, sondern einen Druckverlauf für das mindestens eine druckbeaufschlagbare Element konfigurieren kann, der bei der späteren durchgeführten Massage mittels der Massageeinrichtung wiedergegeben wird. Ein wesentlicher vorteilhafter Aspekt besteht somit darin, Konfigurationsschritte an einer elektronischen Steuereinheit auszuführen, die mit realen am Fahrzeugsitz durchzuführenden Konfigurationsschritten gekoppelt sind.

Das Verfahren zeichnet sich erfindungsgemäß dadurch aus, dass der einerseits vorgenommene mindestens eine Konfigurationsschritt an einer mobilen elektronischen Steuereinheit und/oder an einer fest im Fahrzeug angeordneten elektronischen Steuereinheit vorgenommen wird.

Das Verfahren zeichnet sich bevorzugt erfindungsgemäß dadurch aus, dass das Massageprogramm in der mobilen elektronischen Steuereinheit mittels eines Applikationsprogramms erzeugt und mittels einer Sende- und Empfangseinheit über einen Zugriffspunkt drahtlos oder drahtgebunden zu einer Sende- und Empfangseinheit des Fahrzeugs übertragen und im Fahrzeug über eine kraftfahrzeuginterne Kommunikationsleitung an das Steuergerät des Fahrzeugsitzes des Fahrzeuges weitergeleitet wird. Die Sende- und Empfangseinheit kann auch direkt im Steuergerät des Fahrzeugsitzes angeordnet sein, so dass die kraftfahrzeuginterne Kommunikationsleitung nicht benötigt wird. Bei dieser bevorzugten Ausgestaltung steht dem Anwender in vorteilhafter Weise eine mobile elektronische Steuereinheit mit einem spezifischen Applikationsprogramm zur Verfügung, die er mobil außerhalb und innerhalb des Fahrzeuges flexibel nutzen kann.

Das Verfahren zeichnet sich in einer anderen bevorzugten Ausgestaltung erfindungsgemäß dadurch aus, dass das Massageprogramm in einer fest im Fahrzeug angeordneten elektronischen Steuereinheit mittels eines Applikationsprogramms erzeugt und mittels einer Sende- und Empfangseinheit über einen Zugriffspunkt drahtlos oder drahtgebunden zu einer Sende- und Empfangseinheit des Fahrzeugs übertragen und im Fahrzeug über eine kraftfahrzeuginterne Kommunikationsleitung an das Steuergerät des Fahrzeugsitzes des Fahrzeuges weitergeleitet wird. Die Sende- und Empfangseinheit kann auch direkt im Steuergerät des Fahrzeugsitzes angeordnet sein, so dass die kraftfahrzeuginterne Kommunikationsleitung nicht benötigt wird. Bei einer drahtgebundenen Kommunikation zwischen der elektronischen Steuereinheit und dem Steuergerät des Fahrzeugsitzes können die zur drahtlosen Kommunikation benötigten Sende- und Empfangseinheiten entfallen. Dem Anwender wird hier eine elektronische Steuereinheit zur Verfügung gestellt, die fest im Fahrzeug verbaut ist, so dass in vorteilhafter Weise auch eine bereits im Fahrzeug vorhandene elektronische Steuereinheit zur Konfiguration genutzt werden kann.

Es ist in einer bevorzugten Ausgestaltung vorgesehen, dass das erstellte Massageprogramm nicht nur in der mobilen oder festen elektronischen Steuereinheit mittels des Applikationsprogramms erzeugt und drahtlos oder drahtgebunden an das Steuergerät des Fahrzeugsitzes des Fahrzeuges übertragen wird, sondern dass das erstellte Massageprogramm in dem Steuergerät des Fahrzeugsitzes abgespeichert wird, so dass das Massageprogramm auch ohne das Applikationsprogramm ausführbar ist.

Das Verfahren zeichnet sich erfindungsgemäß weiter dadurch aus, dass der vorgenommene mindestens eine Konfigurationsschritt mittels der elektronischen Steuereinheit eine Bedienhandlung auf einer Bedienoberfläche der elektronischen Steuereinheit ist, bei der mindestens eine Zeitscheibe definiert wird, innerhalb der durch eine weitere Bedienhandlung auf der Bedienoberfläche der elektronischen Steuereinheit mindestens eine Aufnahme mindestens eines druckbeaufschlagbaren Elementes des Fahrzeugsitzes gestartet wird, in der nach dem Start der mindestens einen Aufnahme in dem mindestens einen direkt an dem Sitzteil und/oder an dem Rückenlehnenteil vorgenommenen Konfigurationsschritt eine Bedienhandlung direkt an mindestens einem der druckbeaufschlagbaren Elemente vorgenommen wird, bei der das mindestens eine druckbeaufschlagbare Element für eine von der Dauer der Bedienhandlung abhängigen Zeitspanne mit einem von der Bedienhandlung abhängigen vorgebbaren Druck solange beaufschlagt wird, bis die Aufnahme beendet wird. Die zuvor beschriebenen Merkmale verdeutlichen die Kombination von Konfigurationsschritten in Form von Bedienhandlungen an der elektronischen Steuereinheit und an dem Fahrzeugsitz direkt, worauf in der Beschreibung noch näher eingegangen wird.

Bevorzugt ist vorgesehen, dass in einer Zeitscheibe von dem mindestens einen druckbeaufschlagbaren Element mehrere Aufnahmen aufgenommen werden. Durch diese Vorgehensweise besteht in vorteilhafter Weise die Möglichkeit, eine Bedienhandlung zu wiederholen, so dass mehrere Druckverläufe zu einem einzigen druckbeaufschlagbaren Element aufgenommen werden können, die ihrerseits zu einem Gesamt-Druckverlauf zusammengefasst werden, wie in der Beschreibung ebenfalls näher erläutert ist.

Ferner ist bevorzugt vorgesehen, dass in einer Zeitscheibe von einem oder mehreren druckbeaufschlagbaren Elementen einzeln oder gleichzeitig mindestens eine oder mehrere Aufnahmen aufgenommen wird/werden. Durch diese Vorgehensweise wird die Variabilität der Konfiguration der Massageeinrichtung noch weiter erhöht, da vom Anwender in intuitiver Weise durch direkt am Fahrzeug ausgeführte Bedienhandlungen auch mehrere druckbeaufschlagbare Elemente angesprochen/konfiguriert werden können. Dazu wird in der Beschreibung ebenfalls noch näher ausgeführt. Durch diese Vorgehensweise sind insbesondere auch in vorteilhafter Weise so genannte Muster konfigurierbar.

Das heißt, durch Konfiguration mehrerer Elemente können im Sitzteil und/oder im Rückenlehnenteil Massagemuster abgebildet werden, die - wie bereits erläutert - durch reale am Fahrzeugsitz vorgenommene Bedienhandlungen, wobei eine Bedienhandlung auch parallel an mehreren Elementen gleichzeitig stattfinden kann, vorgenommen werden.

Zudem ist ferner bevorzugt vorgesehen, dass wie zuvor erläutert mehrere Zeitscheiben aufgenommen werden, wobei eine oder mehrere Zeitscheiben mit je einer oder mehreren Aufnahmen nach Abschluss der Konfiguration nach dem Start des Massageprogramms hintereinander ausgeführt werden, wobei die Zeitscheiben in der Konfigurationsreihenfolge oder in einer frei wählbaren Reihenfolge oder nur einige der konfigurierten Zeitscheiben in ihrer Konfigurationsreihenfolge oder frei gewählten Reihenfolge konfiguriert und in Abhängigkeit der Konfiguration in dem nach dem Ende der Konfiguration gestarteten Massageprogramm ausgeführt werden.

Werden mehrere Zeitscheiben konfiguriert, so besteht ein weiterer wesentlicher Vorteil darin, dass die Zeitscheibe wie zuvor beschrieben im Nachhinein hinsichtlich ihrer Reihenfolge beziehungsweise hinsichtlich der Auswahl der Zeitscheibe entsprechend variabel angepasst werden kann, so dass nur durch diese Änderungen unterschiedliche Massageprogramme erstellt werden können, ohne dass erneut Aufnahmen an den druckbeaufschlagbaren Elementen aufgenommen werden müssen.

Erfindungsgemäß ist außerdem bevorzugt vorgesehen, dass diejenige Aufnahme innerhalb einer Zeitscheibe mit der in einem Zeitnehmerbaustein der elektronischen Steuereinheit registrierten maximalen Zeitspanne innerhalb des Massageprogramms als Dauer der jeweiligen Zeitscheibe festgelegt und ausgegeben wird. Der Vorteil dieses Verfahrensmerkmals besteht darin, dass die maximale Dauer der zu konfigurierenden Zeitscheibe automatisch durch das entsprechend applizierte Programm analysiert und als Dauer der Zeitscheibe festgelegt und gespeichert wird, so dass sich bei dem späteren Massagenprogramm eine Zeitscheibendauer ergibt, die von dem Anwender nicht separat eingestellt werden muss.

Bevorzugt ist zudem vorgesehen, dass die Druckverlaufs-Kennlinien, die in einer Zeitscheibe in mehreren aufgenommenen Aufnahmen ein und desselben druckbeaufschlagten Elementes aufgenommen worden sind, nach ihrer Aufnahme überlagert werden, wobei diejenige Aufnahme innerhalb einer Zeitscheibe mit der in dem Zeitnehmerbaustein der elektronischen Steuereinheit maximalen Zeitspanne die maximale Dauer der mehreren aufgenommenen Aufnahmen bestimmt, wobei in jedem Zeitpunkt dieser maximalen Zeitspanne, die in den mehreren aufgenommenen Aufnahmen maximal gemessenen Drücke in einer gemeinsamen Druckverlaufs-Gesamtkennlinie zusammengefasst werden. Diese Vorgehensweise ist ebenfalls von besonderem Vorteil, da es dem Anwender durchaus freigestellt ist, ein und dasselbe Element in verschiedenen Aufnahmen zu konfigurieren, wobei das applizierte Programm eine Mehrfachkonfiguration des ein und desselben Elementes innerhalb einer Zeitscheibe erkennt, jeweils eine Kennlinie erstellt, die dann entsprechend automatisch zu einer Gesamt-Kennlinie verarbeitet wird, wie in der Beschreibung ebenfalls noch näher erläutert ist.

Das erfindungsgemäße Verfahren wird mit einem herkömmlichen Konfigurationssystem zur Konfiguration eines Massageprogramms für eine Massageeinrichtung eines Fahrzeugsitzes eines Fahrzeuges durchgeführt, welches folgende Komponenten umfasst.

Mindestens eine elektronische Steuereinheit, die indirekt oder direkt mit mindestens einem Steuergerät des Fahrzeugsitzes des Fahrzeugs kommuniziert.

Mindestens ein druckbeaufschlagbares Element in einem Fahrzeugsitz, welches über mindestens einen Aktuator mit dem Steuergerät des Fahrzeugsitzes des Fahrzeugs verbunden ist.

Jedem druckbeaufschlagbaren Element des Fahrzeugsitzes ist somit ein Aktuator zugeordnet, der mit dem mindestens einen Steuergerät des Fahrzeugsitzes des Fahrzeugs verbunden ist, der das mindestens eine druckbeaufschlagbare Element mittels des Aktuators mit einem fluiden Medium befüllt oder entleert.

Jedem druckbeaufschlagbaren Element ist ein Drucksensor zugeordnet, der mit dem mindestens einen Steuergerät des Fahrzeugsitzes des Fahrzeugs verbunden ist, der zur Erfassung von Druckverläufen einen Druck über Zeit in dem mindestens einen druckbeaufschlagbaren Element erfasst. Da das fahrzeugsitzseitige Steuergerät mit der elektronischen Steuereinheit wechselseitig kommuniziert, liegen diese Daten auch in der elektronischen Steuereinheit vor.

Die Erfindung wird nachfolgend anhand der zugehörigen Zeichnungen erläutert. Es zeigen:
- Figur 1: eine Bedienoberfläche einer elektronischen Steuereinheit;
- Figur 2: einen Fahrzeugsitz mit druckbeaufschlagbaren Element (SEₙ, REₙ);
- Figur 3A: den Fahrzeugsitz mit zwei mit einem maximalen Druck beaufschlagten Elementen (RE₅, RE₆) in einem Rückenlehnenteil des Fahrzeugsitzes;
- Figur 3B: den Fahrzeugsitz mit zwei mit Druck beaufschlagten Elementen (RE₁, RE₃) in dem Rückenlehnenteil des Fahrzeugsitzes, wobei der Druck geringer ist als der maximale Druck gemäß den beaufschlagten Elementen (RE₅, RE₆) in Figur 3A;
- Figur 3C: den Fahrzeugsitz mit zwei mit einem maximalen Druck beaufschlagten Elementen (RE₆, RE₉) in dem Rückenlehnenteil und zwei mit einem maximalen Druck beaufschlagten Elementen (SE₂, SE₄) in einem Sitzteil des Fahrzeugsitzes;
- Figur 3D: den Fahrzeugsitz mit zwei mit Druck beaufschlagten Elementen (RE₆, RE₇) in dem Rückenlehnenteil des Fahrzeugsitzes, wobei ein Element (RE₇) mit dem maximalen Druck und das zweite Element mit einem geringeren Druck beaufschlagt ist;
- Figur 4A: eine Kennlinie eines Druckverlaufs eines mit Druck beaufschlagbaren Elementes (SEₙ, REₙ) in einer ersten Aufnahme (A₁);
- Figur 4B: eine Kennlinie eines Druckverlaufs desselben mit Druck beaufschlagbaren Elementes (SEₙ, REₙ) gemäß Figur 4A in einer zweiten Aufnahme (A₂);
- Figur 4C: eine Kennlinie eines aus den Druckverläufen gemäß Figur 4A und 4B konsolidierten Druckverlaufs des mit Druck beaufschlagbaren Elementes (SEₙ, REₙ) in der ersten und zweiten Aufnahme (A₁, A₂).

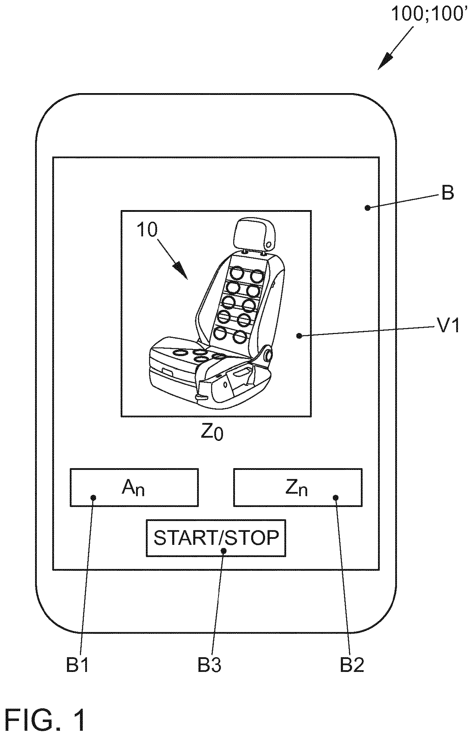

Figur 1 zeigt beispielhaft eine elektronische Steuereinheit 100, 100' mit einer Benutzeroberfläche/Bedienoberfläche B, insbesondere ein Touchscreen, über die Benutzereingaben einer Massageeinrichtung des Fahrzeugs erfasst werden.

Bei der Darstellung gemäß Figur 1 handelt es sich beispielsweise um eine mobile (außerhalb und innerhalb des Fahrzeugsitzes verwendbare) elektronische Steuereinheit 100.

Für Benutzereingaben kann auch eine fest im Fahrzeug installierte elektronische Steuereinheit 100' genutzt werden, die insbesondere ebenfalls einen Touchscreen aufweist, die beispielsweise an einer Mittelkonsole des Fahrzeugs oder in einer einem Sitzplatz zugeordneten Position angeordnet ist.

Die feste elektronische Steuereinheit 100' ist drahtlos, bevorzugt drahtgebunden, mit einem nicht dargestellten Steuergerät des Fahrzeugsitzes 10 eines Fahrzeuges verbunden. Die elektronische Steuereinheit 100' und das nicht näher dargestellte Steuergerät tauschen in beide Richtungen Daten miteinander aus.

Die mobile elektronische Steuereinheit 100 kann beispielweise ein Mobiltelefon, ein Tablet-Computer oder ein Notebook sein. Die mobile elektronische Steuereinheit 100 umfasst eine Sende- und Empfangseinheit. Die Sende- und Empfangseinheit 100 der mobilen elektronischen Steuereinheit 100 ist wenigstens zeitweise drahtlos über eine Funkverbindung mit einer Sende- und Empfangseinheit des Steuergerätes des Fahrzeugsitzes 10 verbunden. Die mobile elektronische Steuereinheit 100 kann auch drahtgebunden mit dem Steuergerät des Fahrzeugsitzes 10 Daten austauschen, so dass die Sende- und Empfangseinheiten nicht benötigt werden. Die mobile elektronische Steuereinheit 100 und das nicht näher dargestellte Steuergerät des Fahrzeugsitzes 10 tauschen bevorzugt drahtlos in beide Richtungen Daten miteinander aus.

Es können zusammengefasst Daten indirekt oder direkt zwischen der mobilen oder fest im Fahrzeug angeordneten elektronischen Steuereinheit 100, 100' drahtlos und/oder drahtgebunden mit dem Steuergerät der Massageeinrichtung des Fahrzeugsitzes 10 ausgetauscht werden.

Es ist erfindungsgemäß vorgesehen, dass die jeweilige Steuereinheit 100, 100' eine graphische Bedienoberfläche B aufweist, die Bedienelemente B1, B2, B3 in der funktional benötigten Anzahl in einer oder mehreren Ebenen anzeigt, so dass Benutzereingaben anhand der graphischen Bedienoberfläche B erfasst werden können. Dadurch können die Benutzereingaben in vorteilhafter Weise besonders einfach und schnell eingegeben werden.

Beispielsweise kann die Bedienung mittels einer graphischen Bedienoberfläche B auf dem Touchscreen eines Mobiltelefons erfolgen, wie in Figur 1 verdeutlicht ist.

Es versteht sich, dass auch eine Gestensteuerung zur Erfassung von Benutzereingaben sowohl an der mobilen elektronischen Steuereinheit 100 als auch an der festen elektronischen Steuereinheit 100' verwendet werden kann.

Im Ausführungsbeispiel ist auf der Bedienoberfläche B ein Visualisierungselement V1 angeordnet, welches einen Fahrzeugsitz 10 abbildet, der ein Sitzteil 12 und ein Rückenlehnenteil 14 umfasst.

Die Bedienoberfläche B umfasst ein Bedienelement B1 für eine Benutzereingabe mit dem Titel "Aufnahme" Aₙ (n = Anzahl der Aufnahmen) und eine Bedienelement B2 für eine Benutzereingabe mit dem Titel "Neue Zeitscheibe" oder "Nächste Zeitscheibe" Zₙ (n = Anzahl der Zeitscheiben).

Das Bedienelement B1 ist beispielsweise multifunktional und fordert zunächst durch eine Beschriftung zu einer Aufnahme als "Erste Aufnahme" Aₙ₌₁ oder "Nächste Aufnahme" Aₙ₊₁ und so weiter auf.

Wird das Bedienelement B1 gedrückt, startet die "Erste Aufnahme" A₁ oder die "Nächste Aufnahme" A₂. Die Beschriftung ändert sich nach jedem Starten und fordert das "Stoppen der jeweiligen Aufnahme" A₁ oder A₂ und so weiter. Anschließend wechselt wieder die Beschriftung, so dass eine "Nächste Aufnahme" Aₙ₊₁ und so weiter gefordert wird.

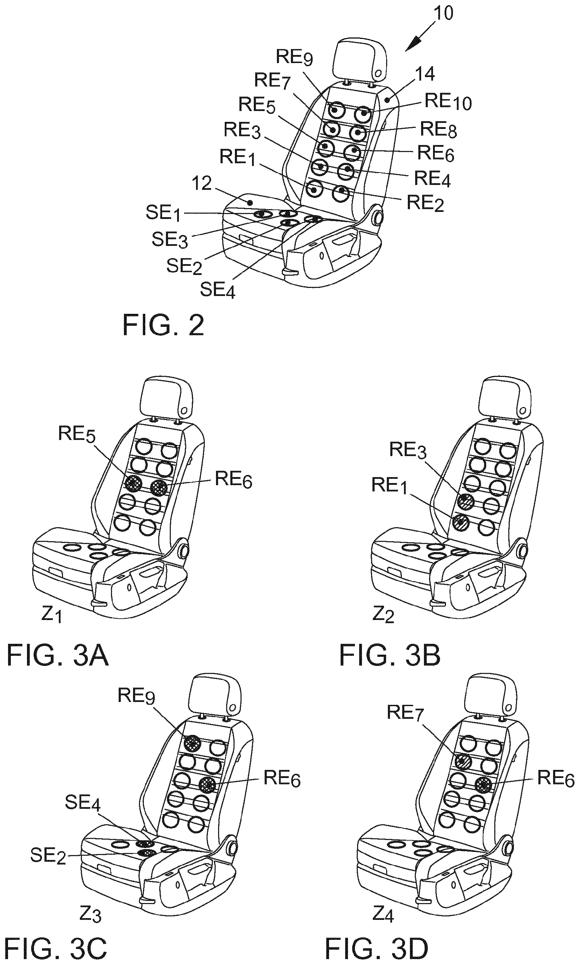

Der in Figur 2 dargestellte Fahrzeugsitz 10 soll den realen in einem Fahrzeug angeordneten Fahrzeugsitz 10 verdeutlichen, der in dem mindestens einen Visualisierungselement V1 der Bedienoberfläche B gemäß Figur 1 gezeigt ist.

Der Fahrzeugsitz 10 weist mehrere druckbeaufschlagbare Elemente SEₙ, REₙ auf, welche beispielsweise unterhalb der Oberfläche des Sitzkissens des Sitzteils 12 beziehungsweise des Rückenlehnenkissens des Rückenlehnenteils 14 angeordnet sind.

Zur Verdeutlichung der Erfindung sind im Sitzteil 12 vier kissenartige druckbeaufschlagbare Elemente SEₙ (n = 1 bis 4) und im Rückenlehnenteil 14 zehn kissenartige druckbeaufschlagbare Elemente REₙ (n = 1 bis 10) dargestellt.

Zur Vereinfachung wird nachfolgend von Druckkissen SEₙ im Sitzteil 12 und Druckkissen REₙ im Rückenlehnenteil 14 gesprochen.

Es ist möglich, eine Vielzahl von Druckkissen SEₙ im Sitzteil 12 und von Druckkissen REₙ im Rückenlehnenteil 14 zu verteilen.

Die Druckkissen SEₙ und REₙ sind über ihnen zugeordnete (nicht näher dargestellte) Aktoren und Drucksensoren mit dem Steuergerät des Fahrzeugsitzes 10 verbunden.

In dem Steuergerät des Fahrzeugsitzes 10 ist beispielsweise werksseitig mindestens ein Massageprogramm abgelegt, welches die Druckkissen SEₙ, REₙ über die nicht weiter dargestellten Aktoren und Drucksensoren derart ansteuert, dass die Druckkissen SEₙ, REₙ einzeln, in Kombination oder in zeitlicher Abfolge aufeinander unter Druckerhöhung über der Zeit mit einem Medium füllt oder das Medium unter Druckerniedrigung über der Zeit wieder aus den einzelnen Druckkissen SEₙ, REₙ entfernt.

Das Medium ist beispielsweise Luft, es sind jedoch auch andere Medien einsetzbar, die in der Lage sind, den Druck über der Zeit und somit den Druckverlauf über der Zeit in den Druckkissen SEₙ, REₙ zu beeinflussen. Bei einer Fahrt des Fahrzeugnutzers mit dem Kraftfahrzeug kann ein solches Massageprogramm abgerufen werden.

Möchte der Fahrzeugnutzer ein auf seine speziellen Bedürfnisse abgestelltes individuelles Massageprogramm konfigurieren, so nimmt er bei dem erfindungsgemäßen Konfigurationsverfahren bestimmte Konfigurationsschritte an dem Fahrzeugsitz 100 direkt und bestimmte Konfigurationsschritte an der mobilen und/oder festen elektronischen Steuereinheit 100, 100' vor, wobei die Konfiguration der Konfigurationsschritte an der mobilen elektronischen Steuereinheit 100 mittels eines als App bezeichneten Applikationsprogramms erfolgt, wie nachfolgend erläutert wird.

Das Applikationsprogramm ist speziell für Massageprogramme konfiguriert, wobei die Erfindung vorsieht, dass direkt am Fahrzeugsitz 10 vorgenommenen Konfigurationsschritte im Visualisierungselement V1 angezeigt werden, wie ebenfalls nachfolgend noch erläutert wird.

Es ist vorgesehen, dass nach einem Aufruf des massagespezifischen Applikationsprogramms/Anwendungsprogramms auf der Bedienoberfläche B der mobilen und/oder festen elektronischen Steuereinheit 100, 100' der Fahrzeugsitz 10 mit den Druckkissen SEₙ, REₙ auf der Bedienoberfläche B dargestellt wird, wobei das Sitzteil 12 im Ausführungsbeispiel die Druckkissen SE₁, SE₂, SE₃, SE₄ und das Rückenlehnenteil 14 im Ausführungsbeispiel die Druckkissen RE₁, RE₂, RE₃, RE₄, RE₅, RE₆, RE₇, RE₈, RE₉, RE₁₀ aufweist.

Es ist ferner vorgesehen, dass jedes Druckkissen SEₙ, REₙ mit dem nicht näher dargestellten Drucksensor gekoppelt ist. Die Drucksensoren kommunizieren über das Steuergerät des Fahrzeugsitzes 10 über das Applikationsprogramm mit der elektronischen Steuereinheit 100, 100' und registrieren jede Druckveränderung in den Druckkissen SEₙ, REₙ, wobei die Drucksensoren genutzt werden, die sehr empfindlich gegenüber Druckveränderungen sind. Das heißt, ein sich ändernder Druck kann entsprechend schnell und mit hoher Genauigkeit ermittelt werden. Die Druckkissen SEₙ, REₙ weisen in einem unbefüllten Ausgangszustand Umgebungsdruck auf.

Ferner ist jedem Druckkissen SEₙ, REₙ im Applikationsprogramm ein Zeitnehmer Tₙ zugeordnet.

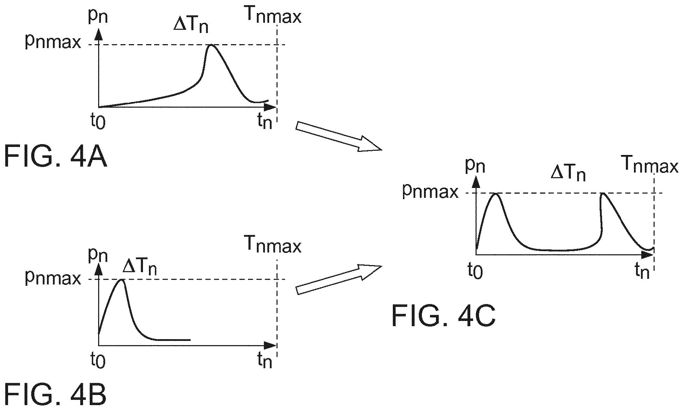

Über den Zeitnehmer Tₙ (n = 1, 2, 3 ...) kann in den Druckkissen SEₙ, REₙ innerhalb einer den Zeitscheiben Zₙ zugeordneten Zeitspanne ΔTₙ ein Druckverlauf pₙ über der Zeit tₙ (vergleiche vorab die Figuren 4A, 4B, 4C) registriert werden.

Die festgelegte Zeitspanne ΔTₙ ist mindestens einer Zeitscheibe Zₙ (n-te Zeitscheibe) zugeordnet, wobei jeder Zeitscheibe Zₙ gleiche oder unterschiedliche Zeitspannen ΔTₙ zugeordnet werden können, wie noch erläutert wird.

Erfindungsgemäß ist vorgesehen, dass der zu massierende Bereich einer Körperpartie (Gesäß und/oder Rücken) einer aufsitzenden Person nicht auf der mobilen und/oder festen elektronischen Steuereinheit 100, 100', sondern direkt am Fahrzeugsitz 10 konfiguriert wird/werden, wobei erfindungsgemäß für alle nachfolgend erläuterten Konfigurationsschritte vorgesehen ist, dass die Konfiguration an der mobilen und/oder festen elektronischen Steuereinheit 100, 100' nachbearbeitet werden kann.

Nachfolgend werden die Konfigurationsschritte anhand der Figuren 1 und 3A bis 3D in einer Zusammenschau beispielhaft erläutert:
Konfigurationsschritt - "Auswahl mindestens einer Zeitscheibe Zₙ":
Der Anwender wählt auf der Bedienoberfläche B der jeweiligen elektronischen Steuereinheit 100, 100' das Bedienelement B2 mit dem Titel "Neue Zeitscheibe" oder "Nächste Zeitscheibe" Zₙ (n= Anzahl der Zeitscheiben).

Ist noch keine Zeitscheibe Zₙ definiert, wird als "Neue Zeitscheibe" die Zeitscheibe Z₁ definiert. Der erste Konfigurationsschritt als Bedienhandlung des Nutzers findet somit an der jeweiligen elektronischen Steuereinheit 100, 100' statt.

Konfigurationsschritt - "Erstellen mindestens einer Aufnahme Aₙ (n = 1)":
Der Anwender betätigt im Sinne einer Druckbetätigung auf mindestens eines der Druckkissen REₙ gemäß dem Beispiel in Figur 3A direkt am Fahrzeugsitz 10 einen Bereich in der Mitte der Rückenlehnenfläche des Rückenlehnenteils 14, so dass die Druckkissen RE₅ und RE₆ mit Druck beaufschlagt werden, wie durch die Kreuzschraffur symbolisiert wird.

Mit Beginn der Bedienhandlung am Fahrzeugsitz 10 wird an der jeweiligen elektronischen Steuereinheit 100, 100' das Bedienelement B1 für eine Benutzereingabe mit dem Titel "Neue Aufnahme" betätigt, insofern es sich um die ersten Aufnahme handelt, wodurch in einer Aufnahme A₁ innerhalb der ersten Zeitscheibe Z₁ ein erster Druckverlauf p₅/t₅ und p₆/t₆ für die Druckkissen RE₅ und RE₆ aufgenommen wird.

In diesem Ausführungsbeispiel bedeutet die Kreuzschraffur, dass die Druckbetätigung an beiden Druckkissen RE₅ und RE₆ derart stattgefunden hat, dass beide Druckkissen RE₅ und RE₆ innerhalb der Zeit t₀ bis t₅ und t₀ bis t₆ zu 100 % mit einem maximalen Druck p₅ₘₐₓ, p₆ₘₐₓ zu 100 % beaufschlagt worden sind. Der zweite Konfigurationsschritt mit zwei Bedienhandlungen des Nutzers findet somit kombiniert am Fahrzeugsitz 10 und an der jeweiligen elektronischen Steuereinheit 100, 100' statt.

Im Applikationsprogramm werden die Zeiten t₅ und t₆ zu 100 % einem Zeitnehmerbaustein Tₙ zugeordnet, so dass zwischen Start-Bedienhandlung am Bedienelement B1 und Stopp-Bedienhandlung am Bedienelement B1 ermittelt werden kann, welche Zeitspannen ΔTₙ zwischen tₒ und t₅ und t₀ und t₆ vergangen sind.

Die Zeitspanne ΔT₅/ΔT₆ mit der längsten Zeitdauer wird, insofern keine weiteren Aufnahmen Aₙ stattfinden, als maximale Zeitspanne ΔT₅ₘₐₓ/ΔT₆ₘₐₓ für die ersten Zeitscheibe Z₁ registriert.

Im Wesentlichen ist somit durch zwei Konfigurationsschritte eine Konfiguration des Massageprogramms bereits abgeschlossen, insofern keine weitere Konfiguration erfolgt, wird bei einem Start des Massageprogramms durch Betätigung eines als Betätigungsfeld ausgebildeten Start/Stop-Bedienelementes B3 des Touchscreens der elektronischen Steuereinheit 100, 100' die Ansteuerung der Aktuatoren der Druckkissen SEₙ, REₙ vorgenommen, so dass die gewünschte Massagefunktion gemäß der vorab erläuterten Konfiguration stattfindet, mithin die Druckkissen RE₅ und RE₆ innerhalb der ersten Zeitscheibe Z₁ gemäß dem abgespeicherten ersten Druckverlauf p₅/t₅ und p₆/t₆ für die Druckkissen RE₅ und RE₆ zu 100 % mit einem vorgebbaren Druck pneumatisch oder hydraulisch mit einem fluiden Medium befüllt und wieder entleert werden.

Durch erneute Betätigung des als Betätigungsfeld auf dem Touchscreen ausgebildeten Start/Stop-Bedienelementes B3 kann das Massageprogramm nach seinem Start vor seiner gemäß der Konfiguration automatisch vorgesehenen Beendigung jederzeit gestoppt werden.

Konfigurationsschritt (optional) - "Erstellen mehrerer Aufnahmen Aₙ (n > 1)":
In jeder Zeitscheibe Zₙ können erfindungsgemäß mehrere Aufnahmen Aₙ (n > 1) erfasst werden, die entsprechend zusammengefasst werden, wie anhand der Figuren 4A, 4B und 4C noch erläutert wird.

Der Nutzer wählt auf der Bedienoberfläche B der jeweiligen elektronischen Steuereinheit 100, 100' das Bedienelement B1 mit dem Titel "Neue Aufnahme" beziehungsweise "Nächste Aufnahme" Aₙ. Da in Zeitscheibe Z₁ bereits eine Aufnahme A₁ vorliegt, wird dem Nutzer im Bedienfeld des Bedienelements B1 automatisch eine "Nächste Aufnahme" A₂ innerhalb der Zeitscheibe Z₁ angeboten. Der Nutzer geht jetzt wie bereits im Konfigurationsschritt "Erstellen mehrerer Aufnahmen Aₙ (n > 1)" beschrieben vor.

Dabei kann der Nutzer eines der Druckkissen RE₅ oder RE₆ oder beide Druckkissen RE₅ und RE₆ erneut wählen, so dass für eines der Druckkissen RE₅, RE₆ oder beide Druckkissen RE₅, RE₆ zwei Aufnahmen A₁ und A₂ vorliegen, wie noch erläutert wird.

Der Nutzer kann aber auch andere Druckkissen SEₙ, REₙ wählen, so dass innerhalb der ersten Zeitscheibe Z₁ eine komplette Massagekonfiguration erfolgt ist.

Jeder der Aufnahmen Aₙ werden nach der Stopp-Bedienhandlung an dem Bedienelement B1 über das Applikationsprogramm die zwischen to und tₙ vergangenen Zeitpannen ΔTₙ dem Zeitnehmerbaustein Tₙ zugeordnet, so dass jetzt ermittelt werden kann, welche Zeitspanne ΔTₙ als maximale Zeitspanne ΔTₙ unter Berücksichtigung aller Aufnahmen Aₙ vorliegt, wobei die im Zeitnehmerbaustein Tₙ registrierte maximale Zeitspanne ΔTₙₘₐₓ (vergleiche Figuren 4A , 4B , 4C) für die erste Zeitscheibe Z₁ als Zeitspanne festgelegt wird. Mit anderen Worten hat die erste Zeitscheibe Z₁ stets eine Zeitspanne, die der maximalen Zeitspanne ΔTₙₘₐₓ mindestens einer der innerhalb der Zeitscheibe Z₁ vorgenommenen Aufnahmen Aₙ entspricht.

Konfigurationsschritt (optional) - "Auswahl mindestens einer weiteren Zeitscheibe Zₙ(n > 1)":
Der Anwender wählt zur Konfiguration einer weiteren, nächsten Zeitscheibe Zₙ (n > 1) auf der Bedienoberfläche B der jeweiligen elektronischen Steuereinheit 100, 100' das Bedienelement B2 mit dem Titel "Nächste Zeitscheibe" Zₙ (n= Anzahl der Zeitscheiben).

Ist bereits eine Zeitscheibe Z₁ definiert, wird dem Nutzer im Bedienfeld des Bedienelements B1 automatisch eine "Neue Zeitscheibe", die Zeitscheibe Z₂, angeboten.

Innerhalb einer nächsten Zeitscheibe Z₂ kann entsprechend dem Konfigurationsschritt "Erstellen mindestens einer Aufnahme Aₙ (n = 1)" oder dem Konfigurationsschritte "Erstellen mehrerer Aufnahmen Aₙ (n > 1)" vorgegangen werden.

Die Massagekonfiguration kann somit mehrere Zeitscheibe Zₙ umfassen, die entsprechend den bereits erläuterten Konfigurationsschritten "Erstellen mindestens einer Aufnahme Aₙ (n = 1)" oder "Erstellen mehrerer Aufnahmen Aₙ (n > 1)" konfiguriert werden, wobei es erfindungsgemäß über das Applikationsprogramm innerhalb der elektronischen Steuereinheit 100, 100' möglich ist, die Reihenfolge der Zeitscheiben Zₙ zu verändern und/oder bereits konfigurierte Zeitscheiben Zₙ wegzulassen und/oder bereits konfigurierte Zeitscheiben Zₙ zu wiederholen. Anhand der Figuren 3B bis 3D werden zur Verdeutlichung der Erfindung beispielhaft weitere Zeitscheiben Zₙ erläutert.

Eine zweite Zeitscheibe Z₂:
Gemäß dem Schritt "Auswahl mindestens einer weiteren Zeitscheibe Zₙ (n > 1)" hat der Nutzer beispielsweise zur weiteren Konfiguration eine sich von der ersten Zeitscheibe Z₁ unterscheidende Konfiguration eine weitere, nächste Zeitscheibe Z₂ (n > 1) auf der Bedienoberfläche B der jeweiligen elektronischen Steuereinheit 100, 100' das Bedienelement B2 mit dem Titel "Nächste Zeitscheibe" Zₙ (n= Anzahl der Zeitscheiben) gewählt.

Gemäß Figur 3B betätigt der Anwender gemäß dem "Erstellen mindestens einer Aufnahme Aₙ (n = 1)" im Sinne einer Druckbetätigung einen Bereich in der Mitte zwischen zwei Druckkissen RE₁, RE₃ in der Rückenlehnenfläche des Rückenlehnenteils 14, so dass die Druckkissen RE₁ und RE₃ durch eine Betätigungshandlung gleichmäßig oder ungleichmäßig mit Druck beaufschlagt werden, wie im Unterschied zur Kreuzschraffur gemäß Figur 3A durch die Schrägschraffur symbolisiert wird.

Mit Beginn der Bedienhandlung am Fahrzeugsitz 10 wird wiederum in der nächsten Zeitscheibe Z₂ an der jeweiligen elektronischen Steuereinheit 100, 100' das Bedienelement B1 für eine Benutzereingabe mit dem Titel "Neue Aufnahme" betätigt, insofern es sich um die erste Aufnahme handelt, wodurch in einer Aufnahme A₁ innerhalb der zweiten Zeitscheibe Z₂ ein Druckverlauf p₁/t₁ und ein Druckverlauf p₃/t₃ für die Druckkissen RE₁ und RE₃ aufgenommen wird.

In diesem Ausführungsbeispiel bedeutet die Schrägschraffur, dass die Druckbetätigung an beiden Druckkissen RE₁ und RE₃ derart stattgefunden hat, dass beide Druckkissen RE₁ und RE₃ beispielsweise innerhalb der Zeit t₁ und t₃ zu 50 % mit einem zwischen den Druckkissen aufgeteilten Druck 50 %/50 % beaufschlagt worden sind. Es versteht sich, dass sich in der zweiten Zeitscheibe Z₂ wiederum der Schritt "Erstellen mehrerer Aufnahmen Aₙ (n > 1)" anschließen kann, der weitere Aufnahmen Aₙ innerhalb der Zeitscheibe Z₂ zulässt.

Eine dritte Zeitscheibe Z₃:
Gemäß dem Schritt "Auswahl mindestens einer weiteren Zeitscheibe Zₙ (n > 1)" hat der Nutzer beispielsweise zur weiteren Konfiguration einer sich von den anderen Zeitscheiben Zₙ unterscheidenden Konfiguration eine weitere, nächste Zeitscheibe Z₃ (n > 1) auf der Bedienoberfläche B der elektronischen Steuereinheit 100, 100' das Bedienelement B2 mit dem Titel "Nächste Zeitscheibe" Zₙ (n= Anzahl der Zeitscheiben) gewählt.

Gemäß Figur 3C betätigt der Anwender gemäß dem Schritt "Erstellen mindestens einer Aufnahme Aₙ (n = 1)" im Sinne einer Druckbetätigung ein beliebiges Muster von Druckkissen SE₂, SE₄ im Sitzteil 12 und RE₆, RE₉ im Rückenlehnenteil 14.

Mit Beginn der Bedienhandlung am Fahrzeugsitz 10 wird an der jeweiligen elektronischen Steuereinheit 100, 100' das Bedienelement B1 für eine Benutzereingabe mit dem Titel "Neue Aufnahme" betätigt, insofern es sich um die erste Aufnahme handelt, wodurch in einer Aufnahme A₁ innerhalb der dritten Zeitscheibe Z₃ die Druckverläufe p₂/t₂ und p₄/t₄ für die Druckkissen SEₙ im Sitzteil 12 und die Druckverläufe p₆/t₆ und p₉/t₉ für die Druckkissen REₙ im Rückenlehnenteil 14 aufgenommen werden.

In diesem Ausführungsbeispiel bedeutet die Kreuzschraffur analog, dass die Druckbetätigung an den Druckkissen SE₂, SE₄ im Sitzteil 12 und RE₆, RE₉ im Rückenlehnenteil 14 derart stattgefunden hat, dass die Druckkissen SE₂, SE₄, RE₆, RE₉ innerhalb der Zeiten t₂, t₄, t₆, t₉ zu 100 % mit einem maximalen Druck p₂ₘₐₓ, p₄ₘₐₓ, p₆ₘₐₓ, p₉ₘₐₓ zu 100 % beaufschlagt worden sind. Es versteht sich, dass sich in der dritten Zeitscheibe Z₃ wiederum der Konfigurationsschritt "Erstellen mehrerer Aufnahmen Aₙ (n > 1)" anschließen kann, der weitere Aufnahmen Aₙ innerhalb der Zeitscheibe Z₃ zulässt.

Die Bedienhandlung des Nutzers von vier Druckkissen SE₂, SE₄, RE₆, RE₉ gleichzeitig ist nicht ohne weiteres möglich, worauf noch eingegangen wird. Insofern verdeutlicht das vorstehende Beispiel eine erfindungsgemäße Konfigurationsweise, die darin besteht, dass innerhalb einer Zeitscheibe Z₃ innerhalb einer Aufnahme Aₙ die Druckkissen SE₂, SE₄, RE₆, RE₉ gleichzeitig oder nicht gleichzeitig betätigt werden können. Mit anderen Worten, die Druckkissen SE₂, SE₄, RE₆, RE₉ können parallel, überschneidend oder nacheinander gedrückt werden, wobei die Druckkraft an den Druckkissen SE₂, SE₄, RE₆, RE₉ in einer Aufnahme Aₙ oder von Aufnahme A₁ zu Aufnahme A₂ und so weiter ebenfalls variieren kann.

Eine vierte Zeitscheibe Z₄:
Gemäß dem Schritt "Auswahl mindestens einer weiteren Zeitscheibe Zₙ (n > 1)" hat der Nutzer beispielsweise zur weiteren Konfiguration einer sich von den anderen Zeitscheiben Zₙ unterscheidenden Konfiguration eine weitere, nächste Zeitscheibe Z₄ (n > 1) auf der Bedienoberfläche B der jeweiligen elektronischen Steuereinheit 100, 100' das Bedienelement B2 mit dem Titel "Nächste Zeitscheibe" Zₙ (n= Anzahl der Zeitscheiben) gewählt.

Gemäß Figur 3D betätigt der Anwender gemäß dem Konfigurationsschritt "Erstellen mindestens einer Aufnahme Aₙ (n =1)" im Sinne einer Druckbetätigung zwei Druckkissen RE₅, RE₇ im Rückenlehnenteil 14.

Mit Beginn der Bedienhandlung am Fahrzeugsitz 10 wird an der jeweiligen elektronischen Steuereinheit 100, 100' das Bedienelement B1 für eine Benutzereingabe mit dem Titel "Neue Aufnahme" betätigt, insofern es sich um die erste Aufnahme handelt, wodurch in einer Aufnahme A₁ innerhalb der vierten Zeitscheibe Z₄ die Druckverläufe p₅/t₅ und p₇/t₇ für die Druckkissen REₙ im Rückenlehnenteil 14 aufgenommen werden.

In diesem Ausführungsbeispiel bedeutet die Kreuzschraffur und die Schrägschraffur, dass die Druckbetätigung an den Druckkissen RE₅, RE₇ im Rückenlehnenteil 14 derart stattgefunden hat, dass die Druckkissen RE₅, RE₇ innerhalb der Zeiten t₅, t₇ zu 100 % an dem Druckkissen und zu 50 % an dem Druckkissen RE₅ beaufschlagt worden sind. Es versteht sich, dass sich in der vierten Zeitscheibe Z₄ wiederum der Konfigurationsschritt "Erstellen mehrerer Aufnahmen Aₙ (n > 1)" anschließen kann, der weitere Aufnahmen Aₙ innerhalb der Zeitscheibe Z₄ zulässt.

Zur Bedienhandlung am Fahrzeugsitz 10:
Es wurden zuvor verschiedene Bedienhandlungen in den Konfigurationsschritten am Fahrzeugsitz 10 direkt erläutert, wobei verdeutlicht wurde, dass die Druckkissen SEₙ, REₙ parallel, überschneidend oder nacheinander gedrückt werden können.

Erfindungsgemäß ist vorgesehen, dass der Nutzer mit einem Finger oder der Handfläche auf den Spiegel des Sitzteils 12 und/oder den Spiegel des Rückenlehnenteils 14 drückt, wobei der Nutzer die Punkte oder Bereiche betätigt, insbesondere drückt, die er sich für sein Massageprogramm wünscht. Dabei erfolgt die Betätigung unbewusst entweder punktuell oder nahe genau eines Druckkissens SEₙ, REₙ oder wie erläutert punktuell oder nahe mehrerer Druckkissen SEₙ, REₙ gleichzeitig.

Dabei ist es erfindungsgemäß nicht ausgeschlossen, dass die Bedienhandlung mit mehreren Fingern und/oder Handflächen erfolgt, so dass beispielsweise zwei oder mehr Druckkissen SEₙ, REₙ gleichzeitig oder nacheinander oder zwei oder mehr Druckkissen SEₙ, REₙ bereichsweise gleichzeitig oder nacheinander gedrückt (konfiguriert) werden können. Mit anderen Worten, es ist möglich, dass mit der einen Hand und mit der anderen Hand punktuell oder bereichsweise nahe an unterschiedlichen nicht zusammenhängenden Druckkissen SEn, REn mit unterschiedlicher Druckkraft und/oder unterschiedlicher Zeitspanne ΔTₙ gedrückt werden kann.

Das erfindungsgemäße Applikationsprogramm ist derart programmiert, dass während einer Aufnahme Aₙ innerhalb einer Zeitscheibe Zₙ Empfehlungen an den Nutzer dahingehend ausgegeben werden, so dass die Aktuatoren der Druckkissen SEn, REn nicht überlastet werden. Mit anderen Worten, es wird (unabhängig von den Empfehlungen ist sicher gestellt), dass die Betätigungshandlungen innerhalb der Konfigurationsschritte von dem System auch innerhalb des konfigurierten Massageprogramms bewältigt werden können.

Zur Visualisierung auf der elektronischen Steuereinheit 100, 100':
Erfindungsgemäß ist vorgesehen, dass die konfigurierten Druckverläufe pₙ/tₙ der Druckkissen SEₙ, REₙ je Aufnahme Aₙ in den Zeitscheiben Zₙ visualisiert werden können, indem durch einen Farbverlauf der Druck der einzelnen Druckkissen SEₙ, REₙ auf dem Display des Bedienfeldes B an dem Druckkissen SEₙ, REₙ dargestellt wird.

In einer Zusatzfunktion können gegebenenfalls auch die Druckverläufe pₙ/tₙ der Druckkissen SEₙ, REₙ je Aufnahme Aₙ in den Zeitscheiben Zₙ als Kennlinien visualisiert werden, wie beispielsweise in den Figuren 4A bis 4C dargestellt ist und nachfolgend erläutert wird.

Die Visualisierung der Kennlinien und die Ermittlung eines Druckverlaufes eines in mehreren Aufnahmen Aₙ (n > 1) innerhalb einer Zeitscheibe Zₙ mehrfach betätigten Druckkissens SEₙ, REn:
Ein Beispiel anhand des Druckkissens RE₇ gemäß Figur 3D:
Gemäß Figur 3D betätigt der Anwender gemäß dem Schritt "Erstellen mehrerer Aufnahmen Aₙ (n > 1)" im Sinne einer Druckbetätigung ein Druckkissen RE₇ im Rückenlehnenteil 14 in zwei aufeinander- oder nicht aufeinanderfolgenden Aufnahmen Aₙ (n > 1) das Druckkissen RE₇.

In einer ersten Aufnahme A₁ innerhalb der vierten Zeitscheibe Z₄ wird der Druck im Druckkissen RE₇ über der Zeit von to bis t₇ₘₐₓ langsam erhöht, wie in der Kennlinie-Druckverlauf 1 in Figur 4A gezeigt ist.

Die Druckspitze beispielsweise x 100 % (p₇ₘₐₓ) erfolgt gegenüber dem Druckverlauf 2 in Figur 4B zu einem späteren Zeitpunkt.

In einer zweiten Aufnahme A₂ innerhalb der vierten Zeitscheibe Z₄ wird der Druck im Druckkissen RE₇ über der Zeit von t₀ bis t₇ < t₇ₘₐₓ schnell erhöht, wie in der Kennlinie-Druckverlauf 2 in Figur 4B gezeigt ist.

Die Druckspitze 100 % (p₇ₘₐₓ) erfolgt gegenüber dem Druckverlauf 2 in Figur 4B zu einem früheren Zeitpunkt.

Dabei können die Druckspitzen anders als im Ausführungsbeispiel unterschiedlich hoch sein.

Zudem wird deutlich, dass die Zeitspannen ΔT₇ der Aufnahmen A₁ und A₂ unterschiedlich lang sind.

Gemäß Figur 4C werden die Kennlinien gemäß den Figuren 4A und 4B überlagert und die jeweils höchsten Drücke p₇ₘₐₓ, t₇ₘₐₓ (Figur 4A) und p₇ₘₐₓ, t₇ (Figur 4B) in jedem Zeitpunkt werden zu einer Gesamtkennlinie zusammengeführt.

Der Gesamtdruck ergibt sich somit aus den jeweils "aufgenommenen" gemessenen maximalen Einzeldrücken pₙₘₐₓ, tₙ entlang der Zeitachse tₙ, wodurch gemäß Figur 4C eine Gesamtkennlinie, mithin ein Druckprofil für das Druckkissen RE₇ innerhalb der Zeitscheibe Zₙ erstellt wird.

Dabei wird der Länge des derart konsolidierten Druckverlaufs die maximale Zeitspanne ΔTₙₘₐₓ einer Aufnahme Aₙ zugeordnet, die gemäß dem Ausführungsbeispiel als Δt₇ₘₐₓ gemäß dem Druckverlauf 1 der ersten Aufnahme A₁ innerhalb der vierten Zeitscheibe Z₄ konfiguriert beziehungsweise registriert worden ist.

Optional kann vorgesehen sein, dass auf der Bedienoberfläche B der jeweiligen elektronischen Steuereinheit 100, 100' ausgewählt wird, ob der gesamte Bereich, mithin der gesamte Spiegel des Sitzteils 12 und/oder der gesamte Spiegel des Rückenlehnenteils 14 konfiguriert werden können.

Gegebenenfalls sitzt der Anwender in diesem Kontext bereits auf dem Fahrzeugsitz 10, so dass der gesamte Spiegel des Sitzteils 12 bereits gedrückt ist, so dass eine Konfiguration vorliegt, die nicht erkannt wird oder nicht möglich ist. Für diesen Fall kann die Konfiguration des Sitzteils 12 zu Massagezwecken über die Bedienoberfläche B der jeweiligen elektronischen Steuereinheit 100, 100' ausgeschlossen werden oder es wird automatisiert anhand der Sitzbelegungserkennung erkannt, dass der Anwender bereits auf dem Fahrzeugsitz 10 aufsitzt, so dass automatisch die Konfiguration des Sitzteils 12 ausgeschlossen und nur noch die Konfiguration des Rückenlehnenteil 14 zugelassen wird.

In bevorzugter Ausgestaltung ist der Fahrzeugsitz 10 und die jeweilige elektronische Steuereinheit 100, 100' dazu eingerichtet, das Verfahren zur Konfiguration des Massageprogramms auszuführen. Zu diesem Zweck umfasst das Fahrzeug, insbesondere der Fahrzeugsitz 10, ein Steuergerät und die mobile und/oder fest installierte elektronische Steuereinheit 100, 100' steht mit dem fahrzeugseitigen Steuergerät zum wechselseitigen Datenaustausch in Verbindung, wobei in der elektronischen Steuereinheit 100, 100' und dem Steuergerät computerlesbare Programmalgorithmen miteinander derart kommunizieren, so dass das Verfahren ausführbar ist, wobei in den Programmalgorithmen gegebenenfalls erforderliche Kennfelder gespeichert sind.

### Bezugszeichenliste

- 100: mobile elektronische Steuereinheit
- 100': elektronische Steuereinheit in einem Fahrzeug
- B: Bedienoberfläche
- B1: Bedienelement
- B2: Bedienelement
- V1: Visualisierungselement
- Zₙ: Zeitscheibe (n = Anzahl der Zeitscheiben)
- Aₙ: Aufnahme (n = Anzahl der Aufnahmen)
- 10: Fahrzeugsitz
- 12: Sitzteil
- SEₙ: druckbeaufschlagbare Elemente im Sitzteil (n = Anzahl der Elemente)
- 14: Rückenlehnenteil
- REₙ: druckbeaufschlagbare Elemente im Rückenlehnenteil (n = Anzahl der Elemente)
- t₀: Nullzeitpunkt
- pₙ/tₙ: Druck über der Zeit eines Elementes SEₙ, REₙ (Druckverlauf)
- pₙₘₐₓ: maximal zugelassener und eingestellter Druck in einem druckbeaufschlagbaren Element SEₙ, REₙ
- Tₙ: Zeitnehmerbaustein
- ΔTₙ: Zeitspanne
- ΔTₙₘₐₓ: maximale Zeitspanne

## Patentansprüche

1. Verfahren zur Konfiguration eines Massageprogramms einer Massageeinrichtung eines Fahrzeugsitzes (10) eines Fahrzeuges mittels einer elektronischen Steuereinheit (100, 100'), die indirekt oder direkt mit mindestens einem Steuergerät des Fahrzeugsitzes (10) des Fahrzeugs kommuniziert, wobei bei der Konfiguration des erstellten Massageprogramms mindestens ein druckbeaufschlagbares Element (SEₙ, REₙ) des Fahrzeugsitzes (10) mittels der elektronischen Steuereinheit (100, 100') über das mindestens eine Steuergerät des Fahrzeugsitzes (10) angesteuert wird und das Steuergerät des Fahrzeugsitzes (10) das Massageprogramm nach dem Start des Massageprogramms gemäß der vorgenommenen Konfiguration durch Ansteuerung der einzelnen druckbeaufschlagbaren Elemente (SEₙ, REₙ) im Fahrzeugsitz (10) ausgibt, **dadurch gekennzeichnet, dass** innerhalb der Konfiguration zur Erstellung des Massageprogramms mindestens ein Konfigurationsschritt mittels der elektronischen Steuereinheit (100, 100') und mindestens ein Konfigurationsschritt direkt an dem Sitzteil (12) und/oder an dem Rückenlehnenteil (14) vorgenommen werden.

2. Verfahren nach Anspruch 1, **dadurch gekennzeichnet, dass** der mindestens eine Konfigurationsschritt an einer mobilen elektronischen Steuereinheit (100) und/oder an einer fest im Fahrzeug angeordneten elektronischen Steuereinheit (100') vorgenommen wird.

3. Verfahren nach Anspruch 1 oder 2, **dadurch gekennzeichnet, dass** das Massageprogramm in der mobilen elektronischen Steuereinheit (100) mittels eines Applikationsprogramms erzeugt und über einen Zugriffspunkt drahtlos oder drahtgebunden zu einer Sende- und Empfangseinheit des Fahrzeugs übertragen und im Fahrzeug über eine kraftfahrzeuginterne Kommunikationsleitung an das Steuergerät des Fahrzeugsitzes (10) des Fahrzeuges weitergeleitet wird, welches nach dem Start des Massageprogramms Befehle zur Ansteuerung der einzelnen druckbeaufschlagbaren Elemente (SEₙ, REₙ) im Fahrzeugsitz (10) ausgibt.

4. Verfahren nach Anspruch 1 oder 2, **dadurch gekennzeichnet, dass** das Massageprogramm in der fest im Fahrzeug angeordneten elektronischen Steuereinheit (100') mittels eines Applikationsprogramms erzeugt und drahtlos oder drahtgebunden über eine kraftfahrzeuginterne Kommunikationsleitung an das Steuergerät des Fahrzeugsitzes (10) des Fahrzeuges übertragen wird, welches Befehle nach dem Start des Massageprogramms zur Ansteuerung der einzelnen druckbeaufschlagbaren Elemente (SEₙ, REₙ) im Fahrzeugsitz (10) ausgibt.

5. Verfahren nach Anspruch 1, **dadurch gekennzeichnet, dass** der mindestens eine Konfigurationsschritt mittels der elektronischen Steuereinheit (100, 100') eine Bedienhandlung auf einer Bedienoberfläche der elektronischen Steuereinheit (100, 100') ist, bei dem mindestens eine Zeitscheibe (Zₙ) definiert wird, innerhalb der durch eine weitere Bedienhandlung auf der Bedienoberfläche der elektronischen Steuereinheit (100, 100') mindestens eine Aufnahme (Aₙ) mindestens eines druckbeaufschlagbaren Elementes (SEₙ, REₙ) des Fahrzeugsitzes (10) gestartet wird, in der nach dem Start der mindestens einen Aufnahme (Aₙ) in dem mindestens einen direkt am Sitzteil (12) und/oder Rückenlehnenteil (14) vorgenommenen Konfigurationsschritt eine Bedienhandlung direkt an mindestens einem der druckbeaufschlagbaren Elemente (SEₙ, REₙ) vorgenommen wird, bei der das mindestens eine druckbeaufschlagbare Element (SEₙ, REₙ) für eine von der Dauer der Bedienhandlung abhängigen Zeitspanne (ΔTₙ) mit einem von der Bedienhandlung abhängigen vorgebbaren Druck (pₙ) solange beaufschlagt wird, bis die Aufnahme (Aₙ) beendet wird.

6. Verfahren nach Anspruch 5, **dadurch gekennzeichnet, dass** in einer Zeitscheibe (Zₙ) von dem mindestens einen druckbeaufschlagbaren Element (SEₙ, REₙ) mehrere Aufnahmen (Aₙ) aufgenommen werden.

7. Verfahren nach Anspruch 5, **dadurch gekennzeichnet, dass** in einer Zeitscheibe (Zₙ) von einem oder mehreren druckbeaufschlagbaren Elementen (SEₙ, REₙ) einzeln oder gleichzeitig mindestens eine oder mehrere Aufnahmen (Aₙ) aufgenommen wird/werden.

8. Verfahren nach Anspruch 5, **dadurch gekennzeichnet, dass** mehrere Zeitscheiben (Zₙ) gemäß Anspruch 6 oder 7 aufgenommen werden, wobei eine oder mehrere Zeitscheiben (Zₙ) mit je einer oder mehreren Aufnahmen (Aₙ) nach Abschluss der Konfiguration nach dem Start des Massageprogramms hintereinander ausgeführt werden, wobei die Zeitscheiben (Zₙ) in der Konfigurationsreihenfolge oder in einer frei wählbaren Reihenfolge oder nur einige der konfigurierten Zeitscheiben (Zₙ) in ihrer Konfigurationsreihenfolge oder frei gewählten Reihenfolge konfiguriert und in Abhängigkeit der Konfiguration in dem Massageprogramm ausgeführt werden.

9. Verfahren nach Anspruch 5, **dadurch gekennzeichnet, dass** diejenige Aufnahme (An) innerhalb einer Zeitscheibe (Zₙ) mit der in einem Zeitnehmerbaustein (Tₙ) der elektronischen Steuereinheit (100, 100') registrieren maximalen Zeitspanne (ΔTₙₘₐₓ) innerhalb des Massageprogramms als Dauer der jeweiligen Zeitscheibe (Zₙ) festgelegt und ausgegeben wird.

10. Verfahren nach mindestens einem der Ansprüche 5 bis 9, **dadurch gekennzeichnet, dass** pₙ/tₙ-Kennlinien, die in einer Zeitscheibe (Zₙ) in mehreren aufgenommenen Aufnahmen (Aₙ) ein und desselben druckbeaufschlagten Elementes (SEₙ, REₙ) aufgenommen worden sind, nach ihrer Aufnahme überlagert werden, wobei diejenige Aufnahme (Aₙ) innerhalb einer Zeitscheibe (Zₙ) mit der in dem Zeitnehmerbaustein (Tₙ) der elektronischen Steuereinheit (100, 100') maximalen Zeitspanne (ΔTₙₘₐₓ) die maximale Dauer der mehreren aufgenommenen Aufnahmen (Aₙ) bestimmt, wobei in jedem Zeitpunkt dieser maximalen Zeitspanne (ΔTₙₘₐₓ) die in den mehreren aufgenommenen Aufnahmen (Aₙ) maximal gemessenen Drücke (pₙₘₐₓ) in einer gemeinsamen pₙ/tₙ-Gesamtkennlinie zusammengefasst werden.

## Claims

1. Method for configuring a massage program of a massage device of a vehicle seat (10) of a vehicle by means of an electronic control unit (100, 100'), which communicates indirectly or directly with at least one control device of the vehicle seat (10) of the vehicle, wherein, in the configuration of the created massage program, at least one pressurizable element (SEₙ, REₙ) of the vehicle seat (10) is controlled by means of the electronic control unit (100, 100') via the at least one control device of the vehicle seat (10), and the control device of the vehicle seat (10) outputs the massage program after the start of the massage program in accordance with the performed configuration by controlling the individual pressurizable elements (SEₙ, REₙ) in the vehicle seat (10), **characterized in that,** within the configuration to create the massage program, at least one configuration step is performed by means of the electronic control unit (100, 100') and at least one configuration step is performed directly at the seat part (12) and/or on the backrest part (14).

2. Method according to claim 1, **characterized in that** the at least one configuration step is performed at a mobile electronic control unit (100) and/or at an electronic control unit (100') fixedly arranged in the vehicle.

3. Method according to claim 1 or 2, **characterized in that** the massage program is created in the mobile electronic control unit (100) by means of an application program and is transmitted wirelessly or by wire via an access point to a transmitting and receiving unit of the vehicle, and in the vehicle is transmitted to the control device of the vehicle seat (10) of the vehicle via an in-vehicle communication line, which control device, after the start of the massage program, outputs commands to control the individual pressurizable elements (SEₙ, REₙ) in the vehicle seat (10).

4. Method according to claim 1 or 2, **characterized in that** the massage program is created in the electronic control unit (100') fixedly arranged in the vehicle by means of an application program, and is transmitted wirelessly or by wire via an in-vehicle communication line to the control device of the vehicle seat (10) of the vehicle, which control device, after the start of the massage program, outputs commands to control the individual pressurizable elements (SEₙ, REₙ) in the vehicle seat (10).

5. Method according to claim 1, **characterized in that** the at least one configuration step is a user action by means of the electronic control unit (100, 100') at a user interface of said electronic control unit (100, 100'), in which at least one time slice (Zₙ) is defined within which at least one recording (Aₙ) of at least one pressurizable element (SEₙ, REₙ) of the vehicle seat (10) is started via a further user action at the user interface of the electronic control unit (100, 100'), in which, after the start of the at least one recording (Aₙ), a user action is performed directly at least at one of the pressurizable elements (SEₙ, REₙ) in the at least one configuration step performed directly on the seat part (12) and/or backrest part (14), given which the at least one pressurizable element (SEₙ, REₙ) is charged, for a time period (ΔTₙ) dependent on the duration of the user action, with a predefinable pressure (pₙ) dependent on the user action, until the recording (Aₙ) is ended.

6. Method according to claim 5, **characterized in that** a plurality of recordings (Aₙ) of the at least one pressurizable element (SEₙ, REₙ) are started in a time slice (Zₙ).

7. Method according to claim 5, **characterized in that** at least one or more recordings (Aₙ) of one or more pressurizable elements (SEₙ, REₙ) are captured individually or simultaneously in a time slice (Zₙ).

8. Method according to claim 5, **characterized in that** a plurality of time slices (Zₙ) according to claim 6 or 7 are captured, wherein one or more time slices (Zₙ) each with one or more recordings (Aₙ) are executed consecutively after conclusion of the configuration after the start of the massage program, wherein the time slices (Zₙ) are configured in the configuration order or in a freely selectable order, or only some of the configured time slices (Zₙ) are configured in their configuration order or freely selected order, and are executed depending on the configuration in the massage program.

9. Method according to claim 5, **characterized in that** that recording (Aₙ) within a time slice (Zₙ) with the maximum period (ΔTₙₘₐₓ) registered in a timer module (Tₙ) of the electronic control unit (100, 100') is determined and output within the massage program as a duration of the respective time slice (Zₙ).

10. Method according to at least one of the claims 5 to 9, **characterized in that** pₙ/tₙ characteristic curves which have been captured in a time slice (Zₙ) in a plurality of captured recordings (Aₙ) of one and the same pressurized element (SEₙ, REₙ), are superimposed after their capture, wherein that recording (Aₙ) within a time slice (Zₙ) with the maximum period (ΔTₙₘₐₓ) in the timer module (Tₙ) of the electronic control unit (100, 100') determines the maximum duration of the plurality of captured recordings (Aₙ), wherein, at every point in time of this maximum period (ΔTₙₘₐₓ), the maximum pressures (pₙₘₐₓ) measured in the plurality of captured recordings (Aₙ) are combined into a common pₙ/tₙ total characteristic curve.

## Revendications

1. Procédé de configuration d'un programme de massage d'un dispositif de massage d'un siège de véhicule (10) d'un véhicule au moyen d'une unité de commande électronique (100, 100'), qui communique directement ou indirectement avec au moins un appareil de commande du siège de véhicule (10) de véhicule, lors de la configuration du programme de massage créé au moins un élément (SEₙ, REₙ) pouvant être soumis à pression du siège de véhicule (10) étant commandé au moyen de l'unité de commande électronique (100, 100') à travers l'au moins un appareil de commande du siège de véhicule (10) et l'appareil de commande du siège de véhicule (10) émettant le programme de massage après le lancement du programme de massage conformément à la configuration effectuée par la commande des éléments (SEₙ, REₙ) pouvant être soumis à pression individuels dans le siège de véhicule (10), **caractérisé en ce que** dans la configuration pour la création du programme de massage au moins une étape de configuration est effectuée au moyen de l'unité de commande électronique (100, 100') et au moins une étape de configuration est effectuée directement sur la partie d'assise (12) et/ou sur la partie de dossier (14).

2. Procédé selon la revendication 1, **caractérisé en ce que** l'au moins une étape de configuration est effectuée dans une unité de commande électronique (100) mobile et/ou dans une unité de commande électronique (100') disposée de manière fixe dans le véhicule.

3. Procédé selon la revendication 1 ou 2, **caractérisé en ce que** le programme de massage est généré dans l'unité de commande électronique (100) mobile au moyen d'un programme d'application et est transmis par connexion filaire ou sans fil à travers un point d'accès à une unité d'émission et réception du véhicule et est redirigé dans le véhicule à travers une ligne de communication interne au véhicule à l'appareil de commande du siège de véhicule (10) du véhicule, lequel émet, après le lancement du programme de massage, des commandes pour la commande des éléments (SEₙ, REₙ) pouvant être soumis à pression individuels dans le siège de véhicule (10).

4. Procédé selon la revendication 1 ou 2, **caractérisé en ce que** le programme de massage est généré dans l'unité de commande électronique (100') disposée de manière fixe dans le véhicule au moyen d'un programme d'application et est transmis par connexion filaire ou sans fil à travers une ligne de communication interne au véhicule à l'appareil de commande du siège de véhicule (10) du véhicule, lequel émet, après le lancement du programme de massage, des commandes pour la commande des éléments (SEₙ, REₙ) pouvant être soumis à pression individuels dans le siège de véhicule (10).

5. Procédé selon la revendication 1, **caractérisé en ce que** l'au moins une étape de configuration est au moyen de l'unité de commande électronique (100, 100') une opération sur une interface opérateur de l'unité de commande électronique (100, 100'), dans laquelle au moins une tranche temporelle (Zₙ) est définie, durant laquelle un enregistrement (Aₙ) d'au moins un élément (SEₙ, REₙ) pouvant être soumis à pression du siège de véhicule (10) est lancée par une autre opération sur l'interface opérateur de l'unité de commande électronique (100, 100'), dans laquelle après le lancement de l'au moins un enregistrement (Aₙ) dans l'au moins une étape de configuration effectuée directement sur la partie d'assise (12) et/ou la partie de dossier (14) une opération est effectuée directement sur au moins un des éléments (SEₙ, REₙ) pouvant être soumis à pression, dans laquelle l'au moins un élément (SEₙ, REₙ) pouvant être soumis à pression est soumis à une pression (pₙ) pouvant être prédéfinie dépendant de l'opération pour la durée d'un intervalle de temps (ΔTₙ) dépendant de l'opération, jusqu'à ce que l'enregistrement (Aₙ) soit terminé.

6. Procédé selon la revendication 5, **caractérisé en ce que** dans la tranche de temps (Zₙ) plusieurs enregistrements (Aₙ) sont pris de l'au moins un élément (SEₙ, REₙ) pouvant été soumis à pression.

7. Procédé selon la revendication 5, **caractérisé en ce que** dans la tranche de temps (Zₙ) un ou plusieurs enregistrements (An) est/sont pris individuellement ou simultanément d'un ou plusieurs éléments (SEₙ, REₙ) pouvant été soumis à pression.

8. Procédé selon la revendication 5, **caractérisé en ce que** plusieurs tranches temporelles (Zₙ) selon la revendication 6 ou 7 sont enregistrées, une ou plusieurs tranches temporelles (Zₙ) comprenant respectivement un ou plusieurs enregistrements (Aₙ) après la finalisation de la configuration sont exécutées l'une pares l'autre après le lancement du programme de massage, les tranches temporelles (Zₙ) étant configurées dans l'ordre de configuration ou dans un ordre pouvant être choisi librement ou seulement quelques-unes des tranches temporelles (Zₙ) configurées étant configurées dans leur ordre de configuration ou dans un ordre pouvant être choisi librement et exécutées en fonction de la configuration dans programme de massage.

9. Procédé selon la revendication 5, **caractérisé en ce que** l'enregistrement (An) dans une tranche temporelle (Zₙ) est défini et émis comme durée de la tranche temporelle (Zₙ) respective dans le programme de massage, avec l'intervalle de temps maximal (ΔTₙₘₐₓ) enregistré dans un composant de chronomètre (Tₙ) de l'unité de commande électronique (100, 100').

10. Procédé selon au moins une des revendications 5 à 9, **caractérisé en ce que** des courbes caractéristiques pₙ/tₙ, qui ont été enregistrées durant une tranche temporelle (Zₙ) dans plusieurs enregistrements (Aₙ) pris d'un seul et même élément (SEₙ, REₙ) pouvant être soumis à pression, sont superposées après leur enregistrement, l'enregistrement (Aₙ) dans une tranche temporelle (Zₙ) ayant l'intervalle de temps maximal (ΔTₙₘₐₓ) du composant de chronomètre (Tₙ) de l'unité de commande électronique (100, 100') définissant la durée maximale des plusieurs enregistrement (Aₙ) pris, à chaque moment de cet intervalle de temps maximal (ΔTₙₘₐₓ) les pressions (Aₙ) mesurées dans les plusieurs enregistrements (Aₙ) pris étant regroupées en une courbe caractéristique totale pₙ/tₙ.
